# EUROPÄISCHE PATENTSCHRIFT

(11) **EP 0 948 282 B1**
(45) Veröffentlichungstag und Bekanntmachung des Hinweises auf die Patenterteilung: **25.09.2002**
(21) Anmeldenummer: 97954443.4
(22) Anmeldetag: 19.12.1997
(51) Int. Cl.: A47L 7/00, A47L 1/05, A47L 11/38

(54) **SAUGGERÄTEVORSATZ EINES STAUBSAUGGERÄTES**
ACCESSORY FOR VACUUM CLEANER
ACCESSOIRE POUR ASPIRATEUR

(30) Priorität: 24.12.1996 DE 19654335
(43) Veröffentlichungstag der Anmeldung: 13.10.1999
(73) Patentinhaber: Vorwerk & Co. Interholding GmbH, 42275 Wuppertal (DE)
(72) Erfinder: THODE, Jürgen, D-42489 Wülfrath (DE); SCHRÖDER, Christian, D-46282 Dorsten (DE); GRAUTE, Ludger, D-45130 Essen (DE); SINSTEDTEN, Johannes, D-41352 Korschenbroich (DE)
(74) Vertreter: Müller, Enno, Dipl.-Ing.
(86) Internationale Anmeldenummer: EP9707183
(87) Internationale Veröffentlichungsnummer: WO98027855

(56) Entgegenhaltungen:
- EP-A- 0 591 087
- WO-A-92/12664
- WO-A-94/08502
- DE-A- 3 718 080
- DE-A- 19 611 371
- US-A- 2 899 981
- US-A- 3 584 330
- US-A- 5 236 425
- US-A- 5 263 224

## Beschreibung

Die Erfindung betrifft einen Sauggerätevorsatz eines Staubsauggerätes, insbesondere zur Feuchtreinigung von senkrechten Flächen, mit einem von einem Saugluftstrom durchsetzten Saugkanal, wobei in dem Saugkanal ein auslösbares Ventil angeordnet ist, das aus einem bewegbaren Verschlusskörper besteht.

Ein Sauggerätevorsatz ist bspw. zunächst aus der DE-A-196 11 371 bekannt, über welchen Vorsatz Flächen bspw. Fensterscheiben feucht gereinigt werden können. Hierzu wird in einem Arbeitsgang eine Reinigungsflüssigkeit auf die Fläche aufgetragen und diese mit den aufgenommenen Schmutzpartikeln abgesaugt. Das aufgenommene Schmutzwasser wird in einem im Saugkanal angeordneten Tank gesammelt. Es sind Sicherheitsvorrichtungen bekannt, welche dem Tank nachgeschaltet den Saugluftstrom unterbrechen. Bei Überschreiten einer vordefinierten Restfeuchte innerhalb des Aufluftstromes hinter dem Tank wird der Saugkanal durch ein auslösbares Ventil geschlossen, dies zur Vermeidung von Motorschäden in dem den Sauggerätevorsatz aufweisenden Staubsauggerät. Bspw. können hier Vorrichtungen zum Einsatz kommen, durch welche verschiedene physikalische Effekte zur Messung der Dichte eines strömenden Fluids ausgelöst werden. So kann bspw. die Kraft, die auf einen im Strömungsquerschnitt eingebauten Körper oder auf eine Querschnittsveränderung der Strömung ausgeübt wird, genutzt werden. Weiter ist bekannt, den Staudruck zu nutzen. Bei einer Zweiphasenströmung mit einer flüssigen Phase kann diese dazu genutzt werden, um Materialeigenschaften zu verändern, bspw. die Reißfestigkeit einer Pappe oder dgl. Die bekannten Dichtsensoren ausbildenden Ventile sind stark von der Strömungsgeschwindigkeit abhängig und anfällig gegen Verschmutzung. Weiter sind diese, bedingt durch eine relativ hohe Anzahl an benötigten Bauelementen, technisch aufwendig.

Weiter ist zum Stand der Technik auf die WO 94/08502 zu verweisen. Das Ventil ist hierbei nach dem Schwimmerprinzip auslösbar. Sobald der Wasserstand in dem Reservoir eine bestimmte Höhe aufweist, wird das Ventil angestoßen bzw. ein Strömungsweg zu dem Ventil geöffnet, welche Anströmung, ohne Wasser belastet zu sein, das Ventil dann in die Verschlussstellung verlagert.

Des Weiteren ist zum Stand der Technik noch auf die EP-A-591 087 zu verweisen. Hieraus sind Ventile bekannt, bei welchen sich der Verschlusskörper von dem Saugluftstrom umströmt wird und bei Überlagerung des Saugluftstroms mit einem Massenstrom erhöhter Dichte in die Verschlussstellung verlagert wird. Diese Verschlusskörper sind jedoch als einseitig eingespanntes

Blatt bzw. als Federbein abgestützte Platte ausgebildet.

Aus der US-A-5,236,425 ist ein Atmungs-Regulierungsgerät bekannt, das zur Verstetigung des Atmens einer Person benutzt wird. Hierzu ist unter anderem in einem Rohr des Gerätes eine Kugel angeordnet, die je nach erzeugtem Unterdruck in dem Rohr wandert. Gegebenenfalls kommt sie an einem Flansch zur Anlage. Immer bleiben jedoch Umströmungswege. Ein vollständiger

Verschluss soll gerade nicht herbeigeführt werden.

Die Erfindung beschäftigt sich mit der Aufgabe, einen bei ständiger Umströmung durch den Saugluftstrom unmittelbar auf einen Feuchtegehalt in dem Saugluftstrom reagierenden Verschlusskörper anzugeben, der bei einfachem Aufbau präzise arbeitet.

Diese Aufgabe ist beim Gegenstand des Anspruches 1 gelöst. Der bewegbare Verschlusskörper in Form einer Kugel, Halbkugel oder Schale ist so ausgebildet und angeordnet, dass bei Überlagerung des Saugluftstroms mit einem Massenstrom erhöhter Dichte der zusätzliche Impuls den Verschlusskörper aus seiner die Ventilöffnungsstellung bildenden Gleichgewichtslage in eine dichtende Ventilverschlussstellung verlagert, was eine Unterbrechung des Saugluftstromes zur Folge hat.

Ist der Impuls durch den Massenstrom klein, so ist auch die Auslenkung des Verschlußkörpers entsprechend klein, womit der Verschlußkörper in bzw. in der Nähe der Ausgangsposition bzw. Ventilöffnungsstellung verharrt. Überschreitet der Massenstrom einen bestimmten Schwellwert, so kann sich der Verschlußkörper nicht mehr in der Gleichgewichtslage halten und bewegt sich schlagartig in die Ventilverschlußstellung, womit der Verschlußkörper den Volumenatrom unterbricht. Es sind somit eindeutige Schaltpunkte definiert: Ein erster Schaltpunkt in einer Stellung des Verschlußkörpers bei vollem Durchlaß des Volumenstromes und ein zweiter in einer Stellung des Verschlußkörpers bei einer vollen Sperrung. Weiter ist das so gebildete Ventil verschmutzungsunempfindlich und unabhängig von Strömungsgeschwindigkeiten, Temperatur und Luftfeuchtigkeit. Weiter ergibt sich aus der erfindungsgemäßen Ausgestaltung ein einfacher und kostengünstiger Aufbau bei hoher Funktionssicherheit. Das erfindungsgemäße Ventil ist unempfindlich gegen kleine Wasservolumenströme von ca. 0,5 ml pro Minute. Weiter ist durch die erfindungsgemäße Ausgestaltung eine spezielle Anströmgeometrie gegeben, die die Gleichgewichtslage für den Verschlußkörper erzeugt. Als besonders vorteilhaft ist die geringe Beeinflußbarkeit des Verschlußkörpers durch die Strömungsgeschwindigkeit zu sehen, dies bei einer hohen Empfindlichkeit für eine Dichteänderung in einer Zweiphasen-Strömung. Von Vorteil erweist es sich hierbei, daß das Ventil störunenpfindlich ist, da nur ein bewegtes Teil, der Verschlußkörper, in der Ventilanordnung vorgesehen ist. Das Ventil weist ein gutes, zeitliches Ansprechverhalten, auf insbesondere ein digitales Schaltverhalten, wobei der Druckverlust in der Strömung gering gehalten ist. Hierzu wird vorgeschlagen, daß der Verschlußkörper eine Kugel ist. Diesbezüglich ist weiter vorgesehen, daß der Verschlußkörper im wesentlichen vertikal bewegbar ist. Um den Schwellwert, ab welchem das System reagieren soll, voreinzustellen, ist vorgesehen, daß eine Ruhestellung hinsichtlich des Abstandes zur Ventilöffnung einstellbar ist. Hierzu kann bspw. über einen axialen Anschlag in dem Saugkanal die axiale Position des Verschlußkörpers verstellt werden. Ferner kann über diesen Verstellmechanismus eine Zwangsauslösung des Systems von außen realisiert werden. Um den Verschlußkörper auf einer Mittelachse des Strömungsquerschnittes zu halten, ist vorgesehen, daß der Verschlußkörper in einem, Umströmungswege freihaltenden Käfig angeordnet ist. Dieser ist derart gestaltet, daß die angreifenden axialen Kräfte den Verschlußkörper in einem Gleichgewichtszustand halten. Hierzu wird weiter vorgeschlagen, daß der Käfig nach innen vorstehende Rippen aufweist, welche einen an den Querschnitt des Verschlußkörpers angepaßten oder größeren Freiraum belassen. Zur Erkennung einer sich schnell bewegenden flüssigen Phase in einem durchströmten Kanal zur Bereitstellung eines mechanischen Schaltsignals, wird weiter vorgeschlagen, daß der Verschlußkörper in seiner Offenstellung federabgestützt ist. Hier wird die Impulskraft einer auf den Verschlußkörper auftreffenden zweiten Fluidphase und die Widerstandskraftänderung des von einem Fluid umströmten Verschlußkörpers genutzt. So ist bei einer konstanten Geschwindigkeit die Widerstandskraft in der Luft größer als in Wasser. Trifft eine zweite Fluidphase mit erhöhter Dichte auf den Verschlußkörper, so verlagert sich dieser entgegen der Federkraft in eine Ventilverschlußstellung, wobei die Federkraft so ausgelegt ist, daß ein Verschließen des Ventils bereits bei in einer geringen Dichteänderung in einer Zweiphasen-Strömung erfolgt. Das Ventil weist demzufolge eine hohe Schaltempfindlichkeit auf.

Weiter wird vorgeschlagen, daß die Feder im Bereich der Ventilöffnung abgestützt ist. Bevorzugt wird hierbei eine Ausgestaltung, bei welcher die Feder im Bereich der Ventilöffnung zentral abgestützt ist. Bspw. kann die Anordnung so getroffen sein, daß die Feder zentral zu einem Führungssteg, mittels welchem der Verschlußkörper geführt ist, angeordnet ist. Dieser Führungssteg ist bevorzugt im Bereich der Ventilöffnung axial zum Saugkanal angeordnet. Die sich einerends auf dem Führungssteg und anderenends an dem Verschlußkörper rückseitig abstützende Feder hält den Verschlußkörper in einer die Ventiloffenstellung definierenden Ruhestellung. Bei erhöhtem Massenstrom bewegt sich der Verschlußkörper entgegen der Federkraft in Richtung auf die Ventilöffnung und verschließt diese ringartig dichtend, zur Unterbrechung des Saugluftstromes. Diese Ventilverschlußstellung kann weiter auch bspw. elektronisch detektiert werden, zur Abschaltung des Sauggerätemotors.

Nachstehend ist die Erfindung desweiteren anhand der beigefügten Zeichnung, die jedoch lediglich mehrere Ausführungsbeispiele darstellt, erläutert. Hierbei zeigt:
- Fig. 1: einen über einen Saugschlauch mit einem Staubsauggerät verbundenen Sauggerätevorsatz zur Feuchtreinigung von Flächen;
- Fig. 2: in schematischer Darstellung einen Längsschnitt durch eine Ventilausbildung in einer ersten Ausführungsform, die Ventiloffenstellung betreffend;
- Fig. 3: den Schnitt gemäß der Linie III-III in Fig. 2;
- Fig. 4: eine der Fig. 2 entsprechende Darstellung, die Ventilverschlußstellung zeigend;
- Fig. 5: eine Ventilanordnung in einer zweiten Ausführungsform, die Ventiloffenstellung zeigend;
- Fig. 6: eine der Fig. 5 entsprechende Darstellung in Ventilverschlußstellung;
- Fig. 7: den Schnitt gemäß der Linie VII-VII in Fig. 6;

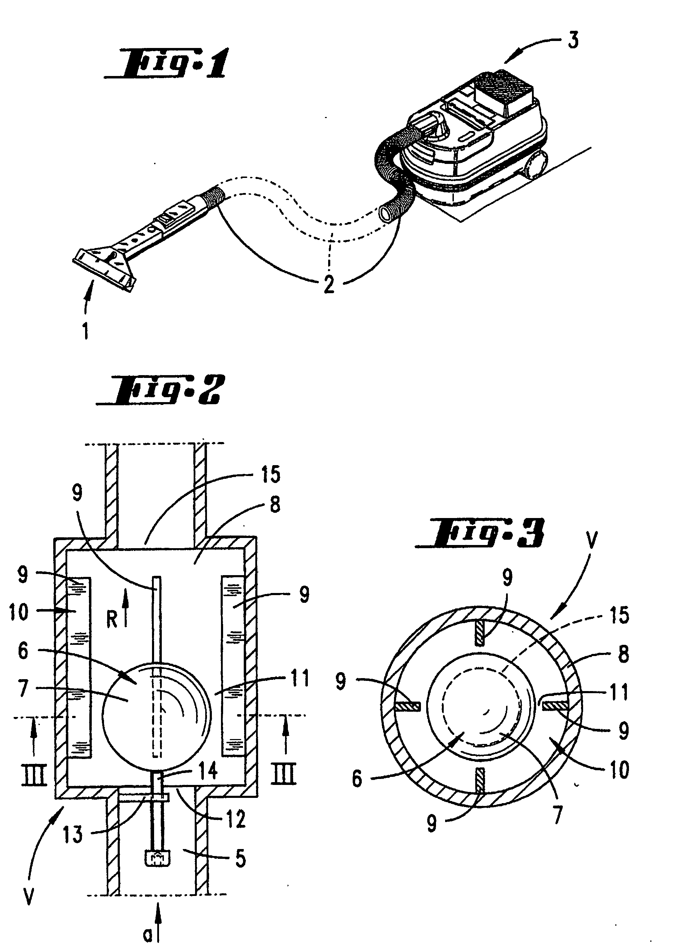

Dargestellt und beschrieben ist zunächst mit Bezug zu Fig. 1 ein Sauggerätevorsatz 1 zur Feuchtreinigung von Flächen, insbesondere von senkrechten Flächen. Dieser steht über einen Saugschlauch 2 in strömungstechnischem Anschluß zu einem Bodenstaubsauggerät 3. Über den Sauggerätevorsatz 1 wird in bekannter Weise eine Reinigungsflüssigkeit auf die zu reinigende Fläche aufgebracht und sogleich zusammen mit den aufgenommenen Schmutzpartikeln abgesaugt. Hierzu besitzt der Sauggerätevorsatz 1 einen in der Fig. 1 nicht näher dargestellten Schmutzwasser-Aufnahmetank 4 im Bereich eines in dem Vorsatzgerät ausgebildeten Saugkanales 5. In diesem Aufnahmetank 4 wird die aufgesaugte Flüssigkeit abgeschieden.

Diesem Aufnahmetank 4 in Strömungsrichtung R nachgeordnet ist ein durch Feuchtbeaufschlagung auslösbares Ventil V angeordnet, welches bei Überschreiten einer vorgegebenen Restfeuchte in dem Luftstrom den Saugkanal verschließt, zur Unterbrechung des Luftstromes.

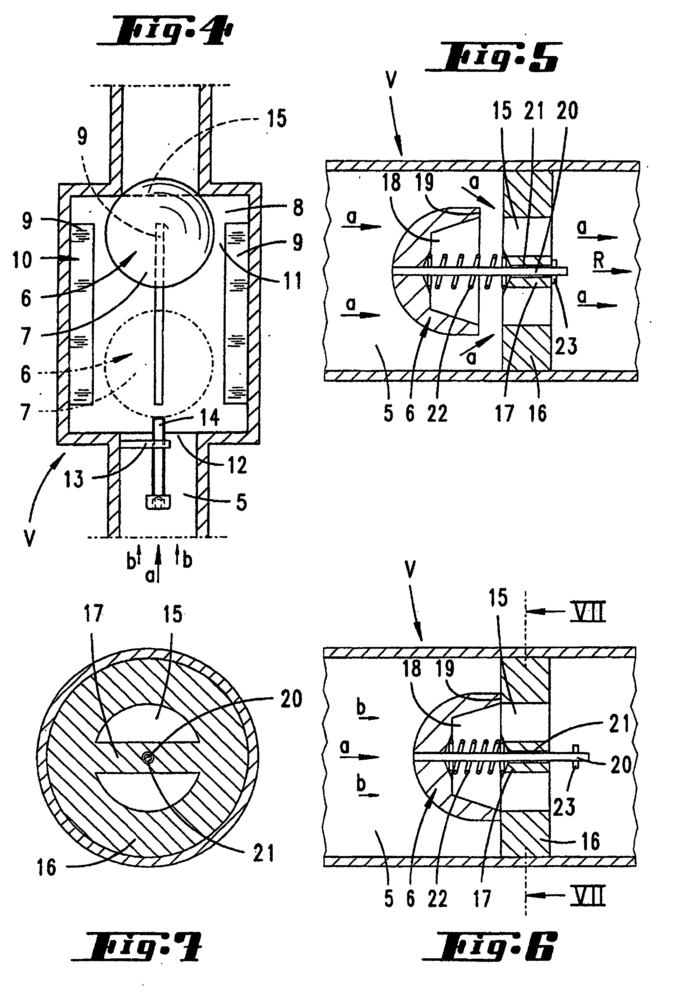

In den Fig. 2 bis 4 ist in einer ersten Ausführungsform ein Ventil V dargestellt, welches im wesentlichen eine, einen Verschlußkörper 6 bildende Kugel 7 aufweist.
Diese ist in einem gegenüber dem Saugkanal 5 querschnittsvergrößerten Bereich in Axialrichtung des Saugkanals 5 bewegbar angeordnet. In diesem querschnittsvergrößerten, koaxial zum Saugkanal 5 ausgerichteten Bereich 8 sind in Achsrichtung des Saugkanals 5 ausgerichtete, innenwandig angeordnete und nach innen vorstehende Rippen 9 vorgesehen zur Bildung eines Käfigs 10. In dem gezeigten Ausführungsbeispiel sind gemäß der Querschnittsdarstellung in Fig. 3 vier radial angeordnete Rippen 9 vorgesehen, welche einen, etwa dem Querschnitt des kugelartigen Verschlußkörpers 6 angepaßten Freiraum 11 belassen.

Der Verschlußkörper 6 ist somit in einem, Umströmungswege freihaltenden Käfig 10 angeordnet.

Durch den gegenüber dem Saugkanal 5 vergrößerten, zylinderförmigen Bereich 8 sind Ein- und Ausgangsöffnungen zum Durchtritt des Saugluftstromes gebildet, wobei die Öffnungsdurchmesser dieser Bereiche kleiner gewählt sind als der Durchmesser des kugelartigen Verschlußkörpers 6.

Im Bereich der Eintrittsöffnung 12 ist ein in den Saugkanal 5 hineinragender Steg 13 angeordnet, welcher einen axialen, verstellbaren Anschlagdorn 14 trägt. Vermittels dieses Anschlages ist die axiale Position des Verschlußkörpers 6 einstellbar, dies bezogen auf den Abstand zu der der Eintrittsöffnung 12 gegenüberliegenden Ventilöffnung 15.

Der rotationssymmetrische Verschlußkörper 6 wird im Betrieb von dem zu vermessenden Fluid (Pfeil a) angeströmt. Durch die besondere Profilierung des Querschnitts des vergrößerten Bereichs 8 wird die Umströmung des Verschlußkörpers 6 so gestaltet, daß die angreifenden axialen Kräfte diesen Verschlußkörper 6 in einem Gleichgewichtszustand halten. Weiter halten die Stege 13 den Verschlußkörper 6 auf der Mittelachse des Strömungsquerschnittes. Dieser Gleichgewichtszustand ist in weiten Bereichen unabhängig von der Strömungsgeschwindigkeit.

Durch die vermittels des Anschlagdornes 14 durchführbare Voreinstellung kann der Stellwert, ab welchem das System reagiert, eingestellt werden. Ferner kann über diesen Verstellmechanismus eine Zwangsauslösung des Systems von außen realisiert werden.

In Fig. 4 ist die Verschlußstellung des Ventils V gezeigt. Hier überlagert ein Massenstrom mit erhöhter Dichte (Pfeil b) die normale Anströmung (Pfeil a). Dieser zusätzliche Impuls drückt den Verschlußkörper 6 aus seiner in Fig. 4 strichpunktiert dargestellten Gleichgewichtslage in Richtung auf die Ventilöffnung 15. Der als Kugel 7 ausgebildete Verschlußkörper 6 verschließt nunmehr dichtend die Ventilöffnung 15, was eine Unterbrechung des Saugluftstromes zur Folge hat.

Ist der Impuls durch den Massenstrom (Pfeil b) klein, so ist auch die Auslenkung klein und der Verschlußkörper 6 verharrt in der Nähe der Ausgangsposition gemäß Fig. 2. Überschreitet der Massenstrom einen bestimmten Schwellwert, so kann sich der Körper nicht mehr in der Gleichgewichtslage gemäß Fig. 2 halten und bewegt sich schlagartig zu der als Rückschlagventil ausgebildeten Ventilöffnung 15.

Durch die erfindungsgemäße Ausgestaltung ist ein digitales Schaltverhalten des Ventiles V gegeben.

Die Fig. 5 bis 7 zeigen eine weitere Ausgestaltung des Erfindungsgegenstandes. Hier ist in dem Saugkanal 5 eine querschnittsreduzierende, ringartige Querwand 16 angeordnet, welche eine zentrale Ventilöffnung 15 beläßt. Diese Ventilöffnung 15 ist durchsetzt von einem diametralen Führungssteg 17 (vergl. hierzu Fig. 7).

Der Verschlußkörper 6 ist in diesem Ausführungsbeispiel schalenartig, halbkugelartig ausgebildet, wobei die verrundete Oberfläche entgegen der Strömungsrichtung R weist. Weiter besitzt dieser Verschlußkörper 6 eine zentrale, rotationssymmetrisch und im Querschnitt trapezförmig ausgebildete Ausnehmung 18, welche sich zu der in Strömungsrichtung R weisenden Flachseite des Verschlußkörpers 6 hin öffnet. Hierdurch ist eine in Strömungsrichtung R gerichtete, koaxial zum Saugkanal 5 ausgerichtete ringförmige Dichtschulter 19 gebildet, deren Durchmesser größer gewählt ist als der der Ventilöffnung 15.

Der Verschlußkörper 6 ist über eine axial angeordnete Ventilstange 20 im Bereich des querwandseitigen Führungssteges 17 gehaltert. Diese Ventilstange 20 taucht einerends innenseitig, die Ausnehmung 18 durchtretend, in den Kopfbereich des Verschlußkörpers 6 ein und anderendig durch eine zentrale Bohrung 21 des Führungssteges 17.

Die Ventilstange 20 ist im Bereich zwischen Verschlußkörper 6 und Führungssteg 17 von einer Druckfeder 22 umgeben, welche den Verschlußkörper 6 in seiner Offenstellung abstützt. Zur Anschlagbegrenzung weist die Ventilstange 20 auf der dem Verschlußkörper 6 abgewandten Seite des Führungssteges 17 einen Querstift 23 auf.

Bei dieser Ausführung des Ventils V wird die Impulskraft einer auf den Verschlußkörper 6 auftreffenden zweiten Fluidphase (Pfeil b) und die Widerstandskraftänderung des von einem Fluid umströmten Verschlußkörpers 6 genutzt. Da bei konstanter Geschwindigkeit die Widerstandskraft in Luft größer ist als in Wasser, bleibt bei entsprechender Ausbildung der Feder 22 das Ventil bei Beaufschlagung einer ersten Fluidphase (Pfeil a) geöffnet. Übersteigt die Impulskraft die Widerstandskraft der Feder 22, so verlagert sich der Verschlußkörper 6 in Richtung auf die Ventilöffnung 15 zur dichtenden Anlage der Schulter 19 auf den die Ventilöffnung 15 umgebenden Bereich (vergl. hierzu Fig. 6). Der Saugluftstrom ist hiernach unterbrochen. Vorteilhaft an dieser Ausgestaltung ist es, daß keine elektrischen Energien und keine Energieumformer, wie z. B. Motoren oder Elektromagneten Verwendung finden. Weiter können durch ein derartig gebildetes Ventil V nahezu alle Flüssigkeiten detektiert werden.

## Patentansprüche

1. Sauggerätevorsatz (1) eines Staubsauggerätes, insbesondere zur Feuchtreinigung von senkrechten Flächen, mit einem von einem Saugluftstrom durchsetzten Saugkanal (5), wobei in dem Saugkanal (5) ein auslösbares Ventil (V) angeordnet ist, das aus einem bewegbaren Verschlusskörper (6) in Form einer Kugel (7) oder einer Halbkugel oder einer Schale besteht, wobei in letzteren Fällen die verrundete Oberfläche entgegen der Strömungsrichtung (R) weist, wobei weiter der Verschlusskörper (6) von dem Saugluftstrom umströmt wird und so ausgebildet und angeordnet ist, dass bei Überlagerung des Saugluftstroms mit einem Massenstrom erhöhter Dichte der zusätzliche Impuls den Verschlusskörper (6) aus seiner die Ventilöffnungsstellung bildenden Gleichgewichtslage in eine dichtende Ventilverschluss-Stellung verlagert, was eine Unterbrechung des Saugluftstromes zur Folge hat.

2. Sauggerätevorsatz nach Anspruch 1, **dadurch gekennzeichnet, dass** der Verschlusskörper (6) im Wesentlichen vertikal bewegbar ist.

3. Sauggerätevorsatz nach einem der vorhergehenden Ansprüche, **dadurch gekennzeichnet, dass** eine Ruhestellung hinsichtlich des Abstandes zur Ventilöffnung (15) einstellbar ist.

4. Sauggerätevorsatz nach einem der vorhergehenden Ansprüche, **dadurch gekennzeichnet, dass** der Verschlusskörper (6) in einem, Umströmungswege freihaltenden Käfig (10) angeordnet ist.

5. Sauggerätevorsatz nach Anspruch 4, **dadurch gekennzeichnet, dass** der Käfig (10) nach innen vorstehende Rippen (9) aufweist, welche einen an den Querschnitt des Verschlusskörpers (6) angepassten oder größeren Freiraum (11) belassen.

6. Sauggerätevorsatz nach einem der vorhergehenden Ansprüche, **dadurch gekennzeichnet, dass** der Verschlusskörper (6) in seiner Offenstellung federabgestützt ist.

7. Sauggerätevorsatz nach Anspruch 6, **dadurch gekennzeichnet, dass** die Feder (22) im Bereich der Ventilöffnung (15) abgestützt ist.

8. Sauggerätevorsatz nach Anspruch 7, **dadurch gekennzeichnet, dass** die Feder (22) im Bereich der Ventilöffnung (15) zentral abgestützt ist.

9. Sauggerätevorsatz nach einem der Ansprüche 6 bis 8, **dadurch gekennzeichnet, dass** die Feder (22) zentral zu einem Führungssteg (17), mittels welchem der Verschlusskörper (6) geführt ist, angeordnet ist.

## Claims

1. Suction device attachment (1) of a vacuum cleaning appliance, in particular for the damp cleaning of vertical surfaces, having a suction duct (5) through which a suction air flow passes, a triggerable valve (V) being disposed in the suction duct (5), the valve consisting of a movable closure member(6) in the form of a ball (7) or a hemisphere or a shell, in the latter cases the rounded surface being directed against the flow direction (R), the suction air flow further flowing around the closure member (6), and the closure member being formed and disposed so that when a mass flow of increased density is superimposed on the suction air flow, the additional impulse displaces the closure member (6) out of its equilibrium position which defines the valve open position into a sealing valve closure position, with the result that the suction air flow is interrupted.

2. Suction device attachment according to Claim 1, **characterized in that** the closure member (6) is movable substantially in the vertical direction.

3. Suction device attachment according to one of the preceding claims, **characterized in that** an at-rest position is adjustable with regard to the distance to the valve opening (15).

4. Suction device attachment according to one of the preceding claims, **characterized in that** the closure member (6) is disposed in a cage (10) which keeps bypass paths clear.

5. Suction device attachment according to Claim 4, **characterized in that** the cage (10) has inwardly projecting ribs (9) which leave a free space which is matched to or larger than the cross_section of the closure member (6).

6. Suction device attachment according to one of the preceding claims, **characterized in that** the closure member (6) is spring-supported in its open position.

7. Suction device attachment according to Claim 6, **characterized in that** the spring (22) is supported in the region of the valve opening (15).

8. Suction device attachment according to Claim 7, **characterized in that** the spring (22) is centrally supported in the region of the valve opening (15).

9. Suction device attachment according to one of Claims 6 to 8, **characterized in that** the spring (22) is disposed centrally with respect to a guide cross-member (17) by means of which the closure member (6) is guided.

## Revendications

1. Adaptateur d'aspirateur (1) pour appareil aspirateur à poussière, en particulier pour le nettoyage humide de surfaces verticales, avec un canal d'aspiration (5) traversé par un flux d'air aspiré, dans lequel est disposé, dans le canal d'aspiration (5) une valve (V) susceptible d'être déclenchée, formée d'un corps de fermeture en clapet (6) mobile ayant la forme d'une bille (7) ou d'une demi-bille ou d'une coque, dans ces derniers cas, la surface arrondie étant tournée à l'encontre de la direction d'écoulement (R), et dans lequel, en outre, le corps de fermeture (7) est en outre entouré par l'écoulement d'air aspiré et est réalisé et disposé de manière que, en cas de superposition de l'écoulement d'air aspiré à un débit masse de densité augmentée, l'impulsion supplémentaire déplace le corps de fermeture (6) hors de sa position d'équilibre, formant la position d'ouverture de valve, à une position de fermeture de valve à effet d'étanchéité, ce qui a comme conséquence une interruption de l'écoulement d'air aspiré.

2. Adaptateur d'aspirateur selon la revendication 2, **caractérisé en ce que** le corps de fermeture (6) est déplaçable de façon sensiblement verticale.

3. Adaptateur d'aspirateur selon l'une des revendications précédentes, **caractérisé en ce qu'**une position de repos par rapport à l'espacement à l'ouverture de valve (15) est réglable.

4. Adaptateur d'aspirateur selon l'une des revendications précédentes, **caractérisé en ce que** le corps de fermeture (6) est disposé dans une cage (10) maintenant libre des voies d'écoulement autour dudit corps.

5. Adaptateur d'aspirateur selon la revendication 4, **caractérisé en ce que** la cage (10) présente des nervures (9) faisant saillie vers l'intérieur, qui laissent un espace libre (11), adapté à l'aire de la section transversale du corps d'obturateur (6) ou plus grand que celle-ci.

6. Adaptateur d'aspirateur selon l'une des revendications précédentes, **caractérisé en ce que** le corps de fermeture (6) est en appui sur un ressort dans sa position d'ouverture.

7. Adaptateur d'aspirateur selon la revendication 6, **caractérisé en ce que** le ressort (22) est en appui dans la zone de l'ouverture de valve (15).

8. Adaptateur d'aspirateur selon la revendication 7, **caractérisé en ce que** le ressort (22) est en appui central dans la zone de l'ouverture de valve (15).

9. Adaptateur d'aspirateur selon l'une des revendications 6 à 8, **caractérisé en ce que** le ressort (22) est disposé centralement par rapport à une nervure de guidage (17), au moyen de laquelle le corps de fermeture (6) est guidé.
